# EUROPÄISCHE PATENTSCHRIFT

(11) **EP 0 563 887 B1**
(45) Veröffentlichungstag und Bekanntmachung des Hinweises auf die Patenterteilung: **20.11.1996**
(21) Anmeldenummer: 93105264.1
(22) Anmeldetag: 30.03.1993
(51) Int. Cl.: F21V 21/00, F21S 1/14

(54) **Tragstruktur für Beleuchtungssysteme**
Support structure for lighting systems
Structure de support pour systèmes d'éclairage

(30) Priorität: 30.03.1992 DE 4210445
(43) Veröffentlichungstag der Anmeldung: 06.10.1993
(73) Patentinhaber: Engel, Hartmut S., D-71691 Freiberg (DE)
(72) Erfinder: Engel, Hartmut S., D-71691 Freiberg (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 444 519
- CH-A- 669 832
- DE-A- 3 620 619

## Beschreibung

Die Erfindung betrifft eine Tragstruktur für Beleuchtungssysteme und deren Komponenten sowie für Trenn-, Deck- und Funktionsflächen, bestehend aus miteinander kuppelbaren, biegesteifen Profilteilen mit im Querschnitt rechteckiger, vier sich in Profillängsrichtung erstreckende Fixier- und Aufnahmeräume umrandender Umfangskontur, wobei die Fixier- und Aufnahmeräume zur Aufnahme bzw. Halterung der Beleuchtungssysteme und/oder deren Komponenten und/oder mechanischer Kopplungselemente bestimmt sind und an Bereichen ihrer Wandung, die innerhalb der Umfangskontur liegen, mit Kuppelnuten und/oder Kuppelstegen versehen sind.

Tragstrukturen dieser Art werden vor allem in Ausstellungs- und Geschäftsräumen verwendet, in denen keine geeigneten Stromschieneninstallationen zur Verfügung stehen oder angebracht werden können, sowie zur Schaffung von Präsentationsbereichen nach dem "shop-in-shop"-System, wo hohe Gestaltungsvariabilität gefordert wird.

Aus der EP-A-0 444 519 ist eine Tragstruktur für Beleuchtungssysteme bekannt, die die eingangs angegebene Ausbildung aufweist. Bei dieser Tragstruktur sind die senkrecht zueinander liegenden Aufnahmeräume unterschiedlich gestaltet und weisen darüberhinaus einen verhältnismäßig komplizierten Aufbau auf, was zur Folge hat, daß sie in ihrer Funktionalität stark eingeschränkt sind, beispielsweise maximal zwei der vier Aufnahmeräume mit Leuchtmitteln bestückbar sind.

Aufgabe der Erfindung ist es, eine Tragstruktur zu schaffen, die unter Verwendung von wenigen Grundelementen eine hohe Variabilität in der Gestaltung wie auch in der Bestückbarkeit zuläßt, den jeweiligen räumlichen Gegebenheiten bestmöglich angepaßt werden kann und eine problemfreie und schnelle Montage und Umrüstung gewährleistet.

Gelöst wird diese Aufgabe nach der Erfindung im wesentlichen dadurch, daß das Profilteil einen bezüglich der horizontalen und der vertikalen Mittelebene spiegelsymmetrischen, X-förmigen Querschnitt aufweist, und daß die vier Fixier- und Aufnahmeräume jeweils als gleichschenkelige Dreiecksräume ausgebildet sind, die an ihrer Grundfläche von der rechteckigen Umfangskontur und an ihren beiden Seitenflächen von den an ihren freien Enden mit sich in Profillängsrichtung erstreckenden Stegleisten versehenen Schenkeln des X-förmigen Profilteilquerschnitts berandet werden.

Die Tragstruktur nach der Erfindung besitzt aufgrund der Profilgestaltung eine hohe Stabilität und läßt es ohne weiteres zu, Strecken bis zu 7 m frei zu überbrücken, so daß aus den Profilteilen entsprechend große Portale und Portalkombinationen zusammengestellt werden können, die in äußerst variabler Weise mit unterschiedlichen Beleuchtungssystemen bestückt werden können und es ferner gestatten, einzelne Portale stabil miteinander zu kuppeln sowie mit diesen Portalen Trenn- oder Deckenflächen sowie Schautafelflächen zu kuppeln.

Aufgrund der im Profil geschaffenen Fixier- und Aufnahmeräume und der gegebenen Abdeck- bzw. Verschlußmöglichkeiten hinsichtlich dieser Fixier- und Aufnahmeräume kann erreicht werden, daß die Tragstruktur stets ein optisch optimales Erscheinungsbild bietet und alle dieses Erscheinungsbild eventuell störenden Zusatzelemente und Komponenten in der Tragstruktur verdeckt untergebracht werden können.

Besonders vorteilhafte Ausgestaltungen und Merkmale der Erfindung sind in den Unteransprüchen angegeben.

Die Erfindung wird nachfolgend anhand mehrerer Ausführungsbeispiele unter Bezugnahme auf die Zeichnung näher erläutert; in der Zeichnung zeigt:
- Figur 1: eine schematische Querschnittsansicht eines Profilteils der Tragstruktur nach der Erfindung mit unterschiedlicher Bestückung der Fixier- und Aufnahmeräume,
- Figuren 2, 3 und 4: weitere Bestückungsbeispiele der Profilteil-Tragstruktur nach Figur 1,
- Figur 5: einen insbesondere zur Errichtung von Portalkonstruktionen bestimmten Verbinderknoten der Tragstruktur,
- Figur 6: eine Detaildarstellung einer Ankopplung eines beispielsweise zwischen zwei Portalen angeordneten Abstandsrohrs,
- Figur 7: eine Detaildarstellung einer Ankopplung einer Halterung für Flächenelemente,
- Figur 8: eine Detaildarstellung einer Ankopplung zur Verspannung textiler Flächen,
- Figur 9: eine Draufsicht einer Doppel-Portalanordnung mit dazwischen verspannter textiler Deckfläche,
- Figur 10: eine schematische Teilansicht einer Kopplung zweier rechtwinklig zueinander verlaufender Profilteile der Tragstruktur nach der Erfindung,
- Figur 11: eine Teildarstellung einer unter einem Winkel verlaufenden Kopplung zweier Profilteile der Tragstruktur, und
- Figur 12: eine Draufsicht auf mehrere Portalanordnungen, die über ein aufgelegtes Profilteil miteinander verbunden sind.

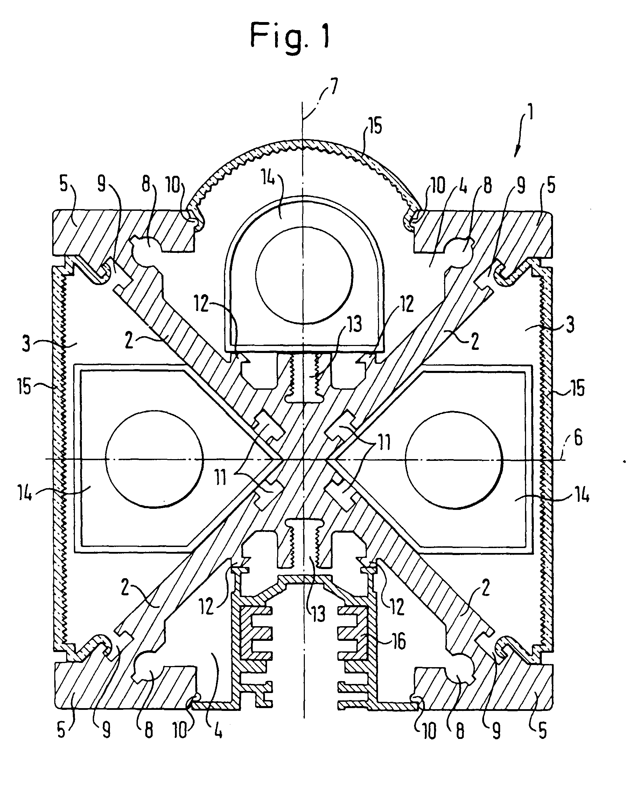

Die Querschnittsansicht nach Figur 1 zeigt ein mit dem allgemeinen Bezugszeichen 1 gekennzeichnetes Profilteil, das im Querschnitt X-förmig ausgebildet ist und eine quadratische Umrißkontur besitzt.

Dieses X-Profil umfaßt vier rechtwinklig zueinander verlaufende Profilschenkel 2, die zwischen sich im Querschnitt dreieckförmige Fixier- und Aufnahmeräume 3, 4 bilden. An den Enden der Profilschenkel 2 ist jeweils eine Stegleiste 5 vorgesehen, wobei diese Stegleisten 5 jeweils gleichen Querschnitt besitzen, jedoch so angeordnet sind, daß die Öffnungsweite der beiderseits der vertikalen Mittelebene 7 gelegenen Räume 3 größer ist als die öffnungsweite der beiderseits der horizontalen Mittelebene 6 gelegenen Räume 4.

In den Profilschenkeln 2 der Fixier- und Aufnahmeräume 3 sind im äußeren und inneren Bereich jeweils T-förmige Kuppelnuten 9, 11 ausgebildet.

In den Fixier- und Aufnahmeräumen 3 sind außenliegende, im Übergangsbereich von Profilschenkel 2 und Stegleiste 5 gelegene, im Querschnitt kreisförmige Kuppelnuten 8 vorgesehen, in die beispielsweise selbstschneidende Schrauben zum Anschluß von Flanschen eingedreht werden können.

Bodenseitig ist in den Fixier- und Aufnahmeräumen 4 eine mittig gelegene, vorzugsweise innen verzahnte Fixiernut 13 vorgesehen, zu deren beiden Seiten Stützstege 12 angeordnet sind, welche mit sich zur Mitte erstreckenden Ansätzen versehen sind, so daß auch über diese Stützstege 12 Haltefunktionen realisiert werden können.

Das Profilteil 1 besteht vorzugsweise aus Aluminium und besitzt daher geringes Gewicht und profilbedingt dennoch eine hohe Biegesteifigkeit.

Beim Ausführungsbeispiel nach Figur 1 ist das Profilteil 1 oben und seitlich mit Leuchtstofflampeneinsätzen 14 bestückt, die in den Fixier- und Aufnahmeräumen 3, 4 durch formschlüssige Kuppelverbindungen oder durch Verschrauben befestigt sind. Die Räume 3, 4 sind mit Prismatik-Profilabdeckungen 15 in lichtdurchlässiger Ausführungsform verschlossen, wobei dem oberen Raum 4 eine gekrümmte, an Kupplungsstegen 10 verrastete Abdeckung 15 zugeordnet ist, während die Öffnung des Raumes 3 durch eine ebene Abdeckung 15 verschlossen ist, welche in den außenliegenden T-förmigen Kuppelnuten fixiert ist. Im unteren Fixier- und Aufnahmeraum 4 ist eine Dreiphasen-Stromschiene 16 befestigt, insbesondere in der Fixiernut 13 verschraubt und auf den Stützstegen 12 abgestützt. In diese Stromschiene können über passende Adapter Einzelleuchten und Strahler befestigt und längs des Profilteils 1 an der jeweils gewünschten Stelle positioniert werden.

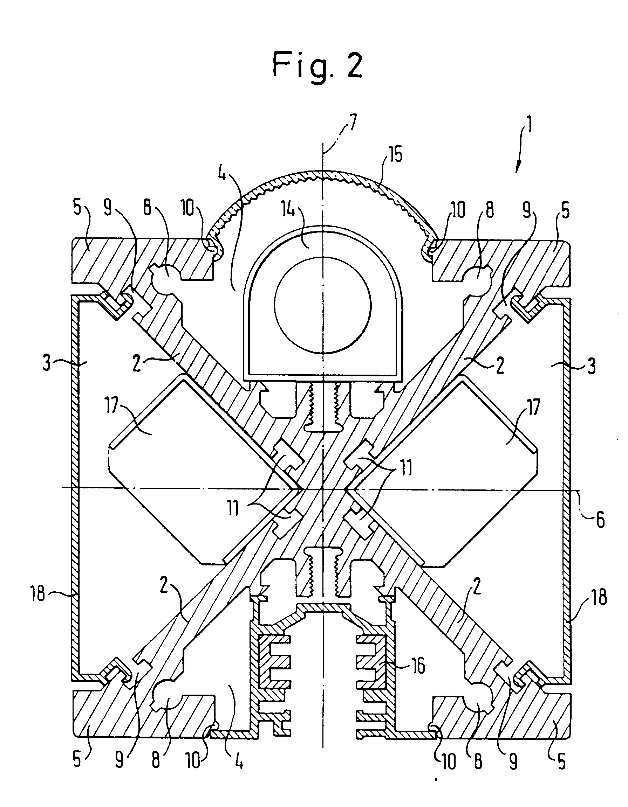

Bei dem in Figur 2 gezeigten Bestückungsbeispiel sind in den seitlichen Fixier- und Aufnahmeräumen 3 Vorschaltgeräte 17 für den Leuchtstofflampeneinsatz untergebracht, und diese Räume 3 sind mit einer vorzugsweise lichtundurchlässigen, beispielsweise aus Aluminium bestehenden Abdeckung 18 verschlossen, so daß das Profilteil 1 in der Seitenansicht einen geschlossenen, lediglich durch die sich zwischen den Stegleisten 5 und der Abdeckung 18 ergebenden Nuten aufgelockerten Eindruck vermittelt.

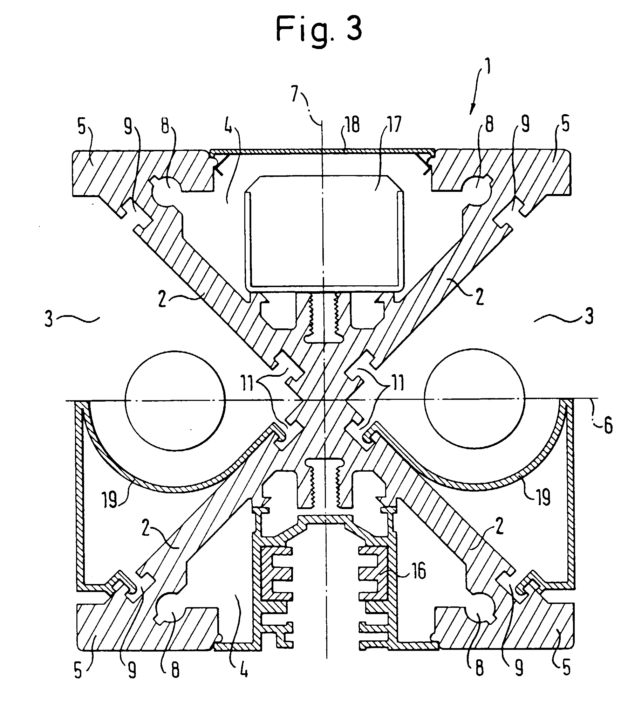

Figur 3 zeigt ein Bestückungsbeispiel, bei dem im unteren Fixier- und Aufnahmeraum 4 wiederum eine Dreiphasen-Stromschiene angeordnet ist, die mit ihrer Außenwand flächenbündig mit den Stegleisten 5 abschließt.

In den beiden seitlichen Fixier- und Aufnahmeräumen 3 sind Leuchtstofflampen mit jeweils einem Halbreflektor zur indirekten Ausleuchtung angebracht, wobei die Halbreflektoren 19 durch Schnapp-Rastverbindungen in den T-Nuten 9, 11 gehaltert sind.

Im oberen Fixier- und Aufnahmeraum 4 sind die für die Leuchtstofflampenanordnung benötigten Vorschaltgeräte 17 untergebracht, und dieser Raum ist durch eine eingeschnappte Abdeckung 18 flächenbündig geschlossen.

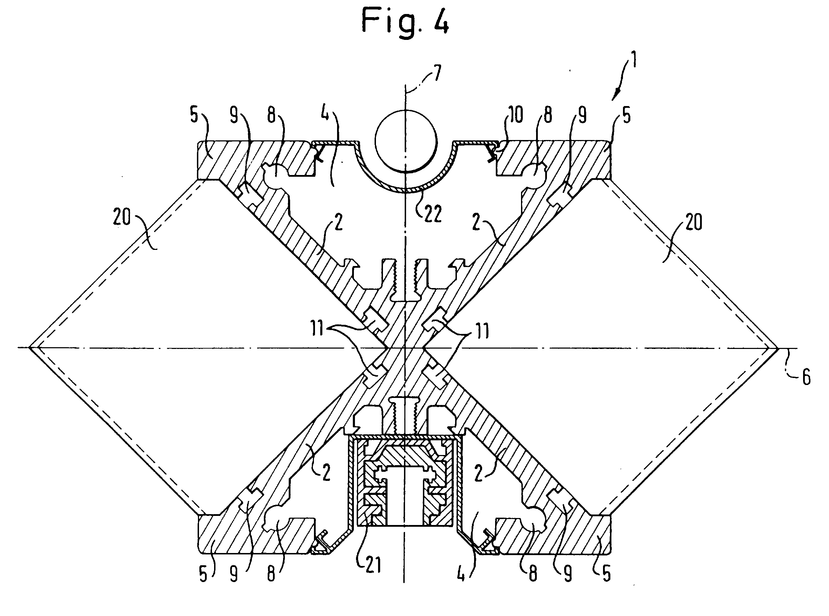

Figur 4 zeigt ein Bestückungsbeispiel, bei dem im oberen Fixier- und Aufnahmeraum 4 ein Reflektorprofil 22 im Öffnungsbereich dieses Raumes an Kuppelstegen 10 fixiert und diesem Reflektorprofil "Neon"-Lampen zur Schaffung einer Lichtlinie zugeordnet sind.

Die für diese Neonröhren erforderlichen Hochspannungstransformatoren 20 sind in den seitlichen Aufnahmeräumen gehaltert und vorzugsweise so gestaltet, daß sie formschlüssig in diese Aufnahmeräume passen und dazu quadratischen Querschnitt besitzen.

Im unteren Aufnahmeraum 4 ist eine Niedervolt-Schiene 21 befestigt, und zwar in einer den Zwischenraum zwischen der Niedervoltschiene 21 und den Stegleisten 5 verschließenden Weise.

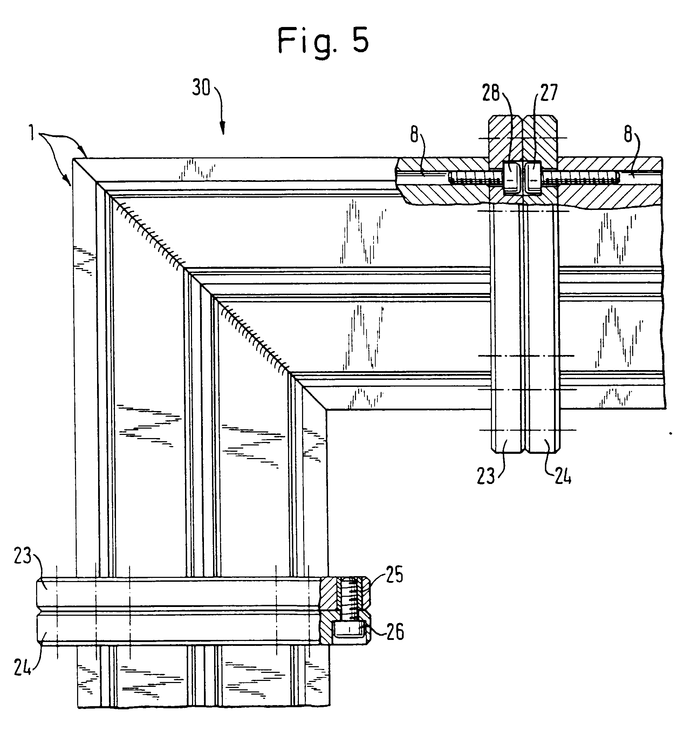

Figur 5 zeigt einen Verbindungsknoten 30 in Schweißkonstruktion, der es gestattet, geradlinige Profilteile zu einer Portalkonstruktion zusammenzufassen.

Dazu sind zwei Profilteile 1 in Gehrung geschnitten und zusammengeschweißt. Grundsätzlich können auf diese Weise ohne Werkzeugkosten neben einer rechtwinkligen Verbindung auch Verbindungen unter beliebigem Winkel geschaffen werden, und zwar in vertikaler Ebene und in horizontaler Ebene oder eine Verbindung von beiden Ebenen.

An den beiden Enden des Verbindungsknotens 30 sind Flansche 23 mittels selbstschneidender Schrauben 28 befestigt, die in die im Querschnitt kreisförmige Kuppelnut 8 des Profils eingedreht werden können. In gleicher Weise sind an geradlinigen Profilabschnitten Flansche 24 über entsprechende Schrauben 27 befestigt.

Die Verbindung zweier aneinandergrenzender Flansche 23, 24 erfolgt außerhalb der Profil-Umfangskontur mittels Schrauben 26, die in im gegenüberliegenden Flansch vorgesehene Gewindeeinsätze 25 eingreifen.

In gleicher Weise können an den Profilteilen 1 auch Fußteile befestigt werden.

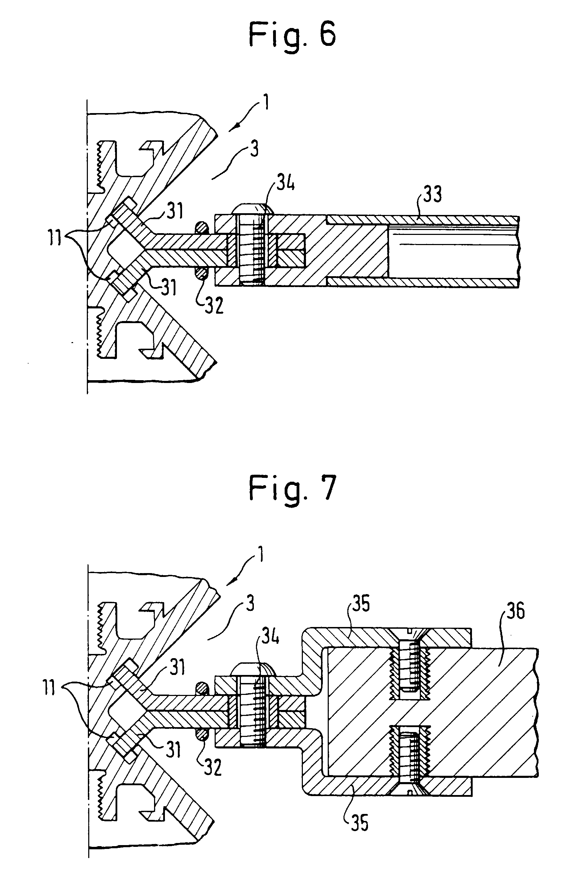

Figur 6 zeigt in Form einer Detaildarstellung die Befestigung eines beispielsweise zwischen zwei Portalen vorgesehenen Abstandsrohrs 33 oder eines entsprechenden Abstandskreuzes am Profilteil 1.

Dazu sind zwei abgewinkelte Spannbleche 31 vorgesehen, die an beliebiger Stelle in die innenliegenden Kupplungsnuten 11 von T-förmiger Querschnittsform eingesteckt und dann gegenseitig mittels eines O-Rings 32 vorverspannt werden können.

Diese Anbringung der Spannbleche 31 ist jederzeit auch nachträglich, das heißt beispielsweise nach Aufbau eines Portals möglich, was für die Flexibilität und Variabilität des Gesamtsystems von Bedeutung ist.

An den Spannblechen 31 kann dann über ein diese beiden Spannbleche gabelförmig übergreifendes Zwischenstück ein Abstandsrohr 33 befestigt werden, wobei eine Verspannung des Zwischenstücks mit den beiden Spannblechen 31 über eine Schraube 34 erfolgt.

Figur 7 zeigt in Form einer Teildarstellung das Prinzip der Befestigung von vertikalen Flächen, insbesondere Informationstafeln, Reflexionsflächen oder Trennwänden zwischen zwei Profilteilen, wobei diese Befestigung wiederum an beliebigen Stellen, und zwar auch nachträglich sowohl horizontal als auch vertikal erfolgen kann. Das jeweilige Flächenelement 36 ist dabei mit seinen Randbereichen mit einem gabelförmigen Haltebügel 35 verschraubt, der seinerseits in der bereits anhand der Figur 6 erläuterten Weise mit den Spannblechen 31 verbunden ist.

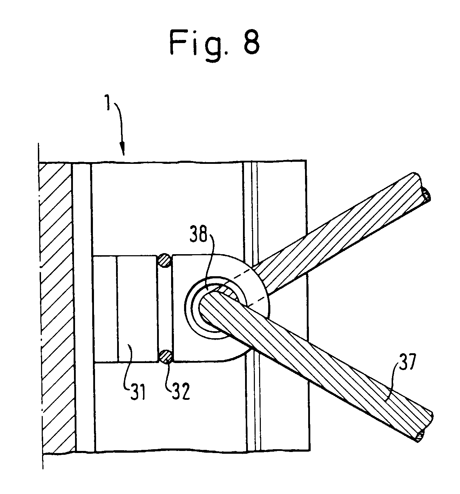

Figur 8 zeigt ein weiteres Beispiel für eine vorteilhafte Nutzung der Schaffung von Befestigungsstellen über variabel einsetzbare Spannbleche 31. In diesem Falle ist das Ende der Spannbleche 31 mit einer Öffnung 38 versehen, durch die eine Spannschnur 37 oder ein Spannseil gefädelt werden kann.

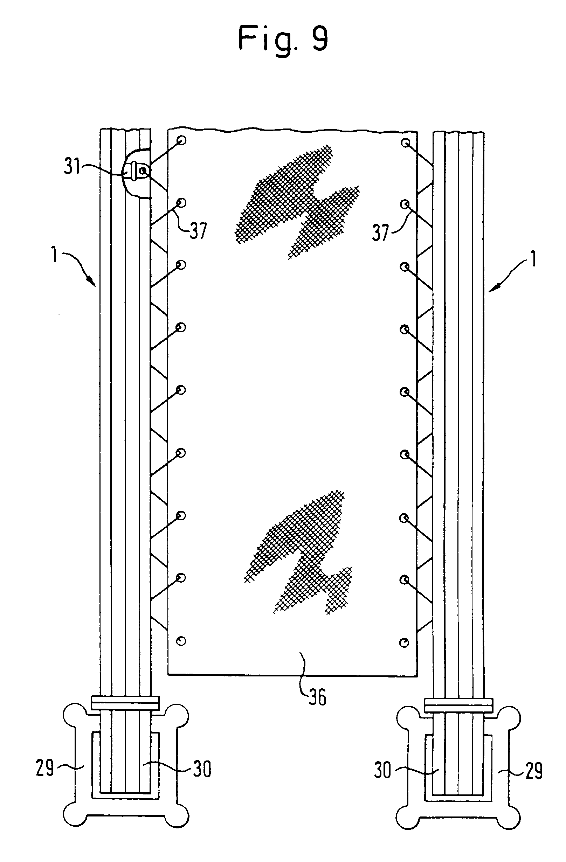

Auf diese Weise ist es möglich, in der in Figur 9 gezeigten Weise zwischen zwei auf Fußteilen 29 stehenden und aus geradlinigen Profilteilen 1 sowie Verbindungsknoten 30 aufgebauten Portalen eine textile Fläche 36 einzuziehen und mittels eines entsprechend gefädelten Seils 37 zu halten und zu spannen. Derartige Flächen können natürlich auch zwischen horizontalen Profilteilen angeordnet werden.

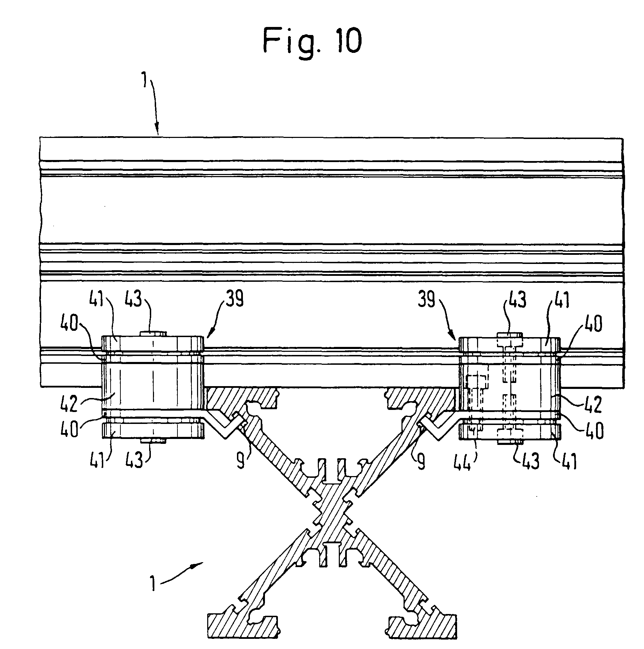

Figur 10 zeigt eine rechtwinklige Verbindung zwischen zwei Profilteilen 1 mittels Schwenkverbindern 39. Diese Schwenkverbinder 39 ermöglichen es, sowohl aufliegende Profilteile als auch unter eine Profilstruktur gehängte Profilteile zu fixieren, wobei der Winkel zwischen den Profilteilen praktisch beliebig gewählt werden kann.

Ein Schwenkverbinder 39 besteht aus zwei Flachklammern 40, die über eine Zwischenscheibe 42 beabstandet sind und mittels Scheiben 41 sowie Schrauben 43 gegen diese Zwischenscheibe 42 verspannt werden können. Die Flachklammern 42 sind an ihrem freien Ende so gekröpft, daß sie in die außenliegenden, T-förmigen Kuppelnuten 9 der Profilteile eingreifen und durch die Verspannung über die Schrauben 43 in diesen Nuten fixiert werden können. Mittels einer Fixierschraube 44 ist es möglich, eine der Klammern 40 in ihrer Position festzulegen, so daß die Winkeleinstellung über die jeweils andere Klammer 40 erfolgt.

Bei der in Figur 10 gezeigten Kupplung zweier Profilteile 1 handelt es sich um eine rechtwinklige Kupplung, wobei das im Querschnitt zu sehende Profilteil unter das in Seitenansicht zu sehende Profilteil 1 gehängt ist.

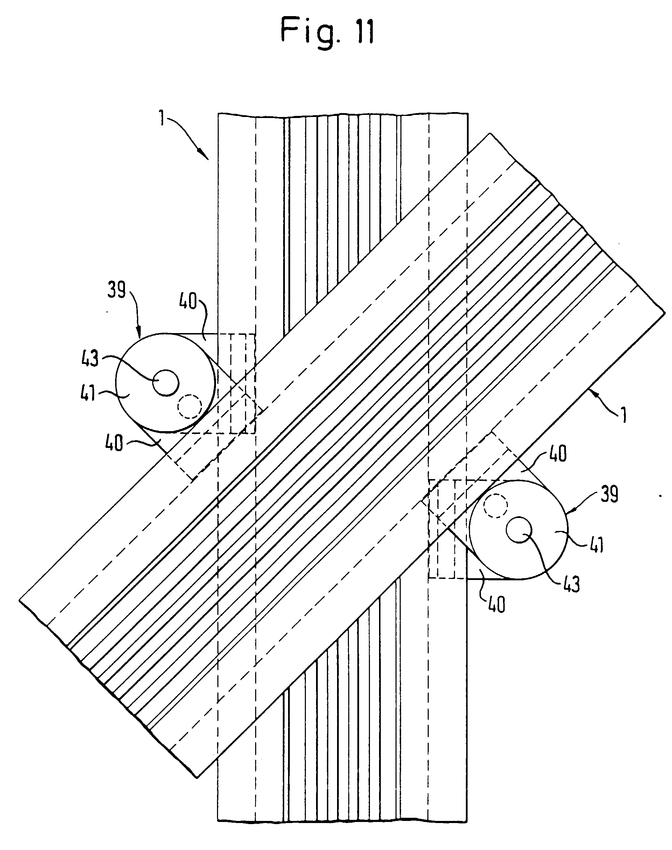

Figur 11 zeigt eine der Figur 10 entsprechende Darstellung, wobei in diesem Falle jedoch die beiden Profilteile 1 und 2 unter einem Winkel von 45° miteinander gekoppelt sind und das angekoppelte Profilteil 1 auf dem darunterliegenden Profilteil liegt.

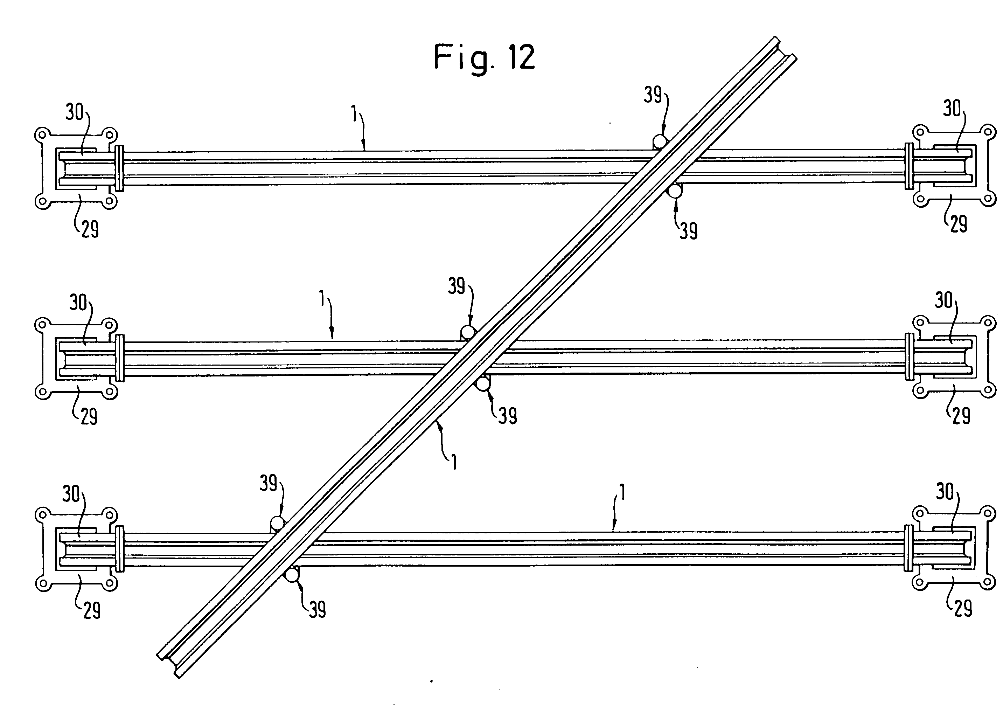

Die Darstellung nach Figur 12 zeigt ein Beispiel einer Kupplung von drei Portalen mittels eines schräg über diese drei Portale gelegten Profilteils 1, wodurch ein ausgesprochen steifer Verband entsteht.

Die Portale stehen dabei auf Fußplatten, und die Verbindung zwischen den einzelnen Portalen und dem schräg darüber verlaufenden Profilteil ist jeweils über zwei Schwenkverbinder 39 realisiert, wie sie anhand der Figur 10 erläutert wurden.

Es sei noch darauf hingewiesen, daß die im Rahmen dieser Ausführungsbeispiele erläuterten Bestückungsbeispiele noch in vielfacher Weise variiert werden können und daß auch die Kopplung verschiedener Portale je nach den örtlichen Gegebenheiten und den Stabilitätserfordernissen über eine unterschiedliche Anzahl von Abstandsrohren, Verbindungskreuzen oder Profilteilen erfolgen kann.

### Bezugszeichenliste

- 1: Profilteil
- 2: Profilschenkel
- 3: Fixier- und Aufnahmeraum
- 4: Fixier- und Aufnahmeraum
- 5: Stegleiste
- 6: Horizontale Mittelebene
- 7: Vertikale Mittelebene
- 8: Außenliegende Kuppelnut
- 9: Außenliegende Kuppelnut
- 10: Kuppelsteg
- 11: Innenliegende Kuppelnut
- 12: Stützsteg
- 13: Fixiernut
- 14: Leuchtstofflampeneinsatz
- 15: Prismatische Profilabdeckung
- 16: Dreiphasen-Stromschiene
- 17: Vorschaltgerät
- 18: Alu-Abdeckung
- 19: Halbreflektor
- 20: Hochspannungstrafo
- 21: Niedervoltschiene
- 22: Reflektorprofil
- 23: Eckteilflansch
- 24: Anschlußflansch
- 25: Gewindeeinsatz
- 26: Schraube
- 27: Selbstfurchende Schraube
- 28: Selbstfurchende Schraube
- 29: Fußteil
- 30: Verbinderknoten
- 31: Spannblech
- 32: O-Ring
- 33: Abstandsrohr
- 34: Klemmschraube
- 35: Haltebügel
- 36: Flächenelement
- 37: Spannschnur
- 38: Öffnung
- 39: Schwenkverbinder
- 40: Flachklammer
- 41: Scheibe
- 42: Zwischenscheibe
- 43: Klemmschraube
- 44: Fixierschraube

## Patentansprüche

1. Tragstruktur für Beleuchtungssysteme und deren Komponenten sowie für Trenn-, Deck- und Funktionsflächen, bestehend aus miteinander kuppelbaren, biegesteifen Profilteilen (1) mit im Querschnitt rechteckiger, vier sich in Profillängsrichtung erstreckende Fixier- und Aufnahmeräume (3, 4) umrandender Umfangskontur, wobei die Fixier- und Aufnahmeräume (3, 4) zur Aufnahme bzw. Halterung der Beleuchtungssysteme und/oder deren Komponenten und/oder mechanischer Kopplungselemente (31, 37) bestimmt sind und an Bereichen ihrer Wandung, die innerhalb der Umfangskontur liegen, mit Kuppelnuten (8, 9) und/oder Kuppelstegen (10) versehen sind,
dadurch **gekennzeichnet**,
daß das Profilteil (1) einen bezüglich der horizontalen und der vertikalen Mittelebene (6, 7) spiegelsymmetrischen, X-förmigen Querschnitt aufweist, und daß die vier Fixier- und Aufnahmeräume (3, 4) jeweils als gleichschenkelige Dreiecksräume ausgebildet sind, die an ihrer Grundfläche von der rechteckigen Umfangskontur und an ihren beiden Seitenflächen von den an ihren freien Enden mit sich in Profillängsrichtung erstreckenden Stegleisten (5) versehenenen Schenkeln (2) des X-förmigen Profilteilquerschnitts berandet werden.

2. Tragstruktur nach Anspruch 1,
dadurch **gekennzeichnet**,
daß die Öffnungsweite der rechtwinklig zueinander liegenden Fixier- und Aufnahmeräume (3, 4) unterschiedlich ist.

3. Tragstruktur nach Anspruch 1 oder 2,
dadurch **gekennzeichnet**,
daß bei den Fixier- und Aufnahmeräumen (4) mit geringerer Öffnungsweite Kuppelnuten (8) und/oder Kuppelstege (10) an oder im Bereich der Stegleisten (5) vorgesehen sind und daß bei den Fixier- und Aufnahmeräumen (3) mit größerer Öffnungsweite die Kuppelnuten (9, 11) in den außen- und innenliegenden Bereichen der Profilschenkel (2) ausgebildet sind.

4. Tragstruktur nach einem der vorhergehenden Ansprüche,
dadurch **gekennzeichnet**,
daß zumindest in den Fixier- und Aufnahmeräumen (4) mit geringerer Öffnungsweite bodenseitig zur Schraubbefestigung geeignete Fixiernuten (13) und vorzugsweise dazu symmetrisch gelegene Stützstege (12) vorgesehen sind.

5. Tragstruktur nach einem oder mehreren der vorhergehenden Ansprüche,
dadurch **gekennzeichnet**,
daß die Kuppelnuten (8, 9) aus im Querschnitt T-förmigen, kreis- und/oder teilkreisförmig ausgebildeten Nuten bestehen.

6. Tragstruktur nach einem der vorhergehenden Ansprüche,
dadurch **gekennzeichnet**,
daß die Profilteilenden mit Kuppelflanschen (24) oder Fußteilen (29) vorzugsweise über die im Querschnitt kreisförmigen Kuppelnuten (8) mittels selbstfurchender Schrauben (27, 28) verbindbar sind.

7. Tragstruktur nach einem oder mehreren der vorhergehenden Ansprüche,
dadurch **gekennzeichnet**,
daß gerade Profilteile (1) mit einem vorzugsweise rechtwinkligen Verbinderknoten (30) unter Ausbildung von Portalstrukturen über Flansche (23, 24) kuppelbar und insbesondere verschraubbar sind.

8. Tragstruktur nach einem oder mehreren der vorhergehenden Ansprüche,
dadurch **gekennzeichnet**,
daß mit den Profilteilen (1) verbindbare mechanische Kopplungselemente in Form von Spannblechen (31) vorgesehen sind, die paarweise gegeneinander und in innenliegenden Kuppelnuten (11) der Profilteile (1) verspannbar sind und an deren freiem Ende Abstandselemente (33), Haltebügel (35) für Flächenelemente (36) und/oder Spannschnüre (37) befestigbar sind.

9. Tragstruktur nach einem oder mehreren der vorhergehenden Ansprüche,
dadurch **gekennzeichnet**,
daß Profilteile (1) flächig aneinanderliegend unter unterschiedlichen Winkeln miteinander über Schwenkverbinder (39) kuppelbar sind, die jeweils zwei zueinander verschwenkbare, gegen eine Zwischen- oder Distanzscheibe (42) verspannbare Flachklammern (40) aufweisen, welche in außenliegenden Kuppelnuten (9) der Profilteile (1) durch den Spannvorgang fixierbar sind.

## Revendications

1. Structure porteuse pour systèmes d'éclairage et leurs composants, ainsi que pour des surfaces de séparation, de plafond et des surfaces fonctionnelles, constituée de pièces profilées (1) susceptibles d'être accouplées les unes aux autres et rigides vis-à-vis de la flexion, avec un contour périphérique qui entoure quatre espaces de réception et de fixation (3, 4) de section rectangulaire et s'étendant en direction longitudinale du profilé, les espaces de réception et de fixation (3, 4) étant destinés à recevoir et à maintenir les systèmes d'éclairage et/ou leurs composants et/ou des éléments d'accouplement mécanique (31, 37) et étant pourvus, dans les régions de leur paroi qui sont situées à l'intérieur du contour périphérique, de rainures d'accouplement (8, 9) et/ou de barrettes d'accouplement (10), caractérisée en ce que la pièce profilée (1) présente une section symétrique en forme de X par rapport au plan médian horizontal et au plan médian vertical (6, 7), et en ce que les quatre logements de réception et de fixation (3, 4) sont formés respectivement comme des espaces triangulaires isocèles qui sont bordés au niveau de leurs surfaces de base par le contour périphérique rectangulaire et sont bordés au niveau de leurs deux surfaces latérales par les branches (2), qui sont pourvues à leurs extrémités libres de barrettes (5) qui s'étendent dans la direction longitudinale du profilé, de la section de la pièce profilée en forme de X.

2. Structure porteuse selon la revendication 1, caractérisée en ce que la largeur d'ouverture des logements de réception et de fixation (3, 4) situés perpendiculairement l'un à l'autre est différente.

3. Structure porteuse selon l'une ou l'autre des revendications 1 et 2, caractérisée en ce que dans les logements de réception et de fixation (4) qui présentent une plus faible largeur d'ouverture, il est prévu des rainures d'accouplement (8) et/ou des barrettes d'accouplement (10) sur les barrettes (5) ou dans la région de celles-ci, et dans les logements de réception et de fixation (3) qui présentent une plus grande largeur d'ouverture les rainures d'accouplement (9, 11) sont réalisées dans les régions extérieures et intérieures des branches du profilé (2).

4. Structure porteuse selon l'une quelconque des revendications précédentes, caractérisée en ce que du moins dans les logements de réception et de fixation (4) qui présentent une plus faible largeur d'ouverture, il est prévu du côté du fond et pour la fixation à l'aide de vis des rainures de fixation appropriées (13) et de préférence des barrettes d'appui (12) disposées symétriquement par rapport à ces rainures.

5. Structure porteuse selon l'une ou plusieurs des revendications précédentes, caractérisée en ce que les rainures d'accouplement (8, 9) sont constituées par des rainures réalisées avec une section en forme de T, en forme circulaire ou en forme partiellement circulaire.

6. Structure porteuse selon l'une quelconque des revendications précédentes, caractérisée en ce que les extrémités des pièces profilées sont susceptibles d'être reliées avec des brides d'accouplement (24) ou des pièces de base (29) au moyen de vis autoforeuses (27, 28) de préférence au moyen des rainures d'accouplement de section circulaire (8).

7. Structure porteuse selon l'une plusieurs des revendications précédentes, caractérisée en ce que les pièces profilées droites (1) sont susceptibles d'être accouplées, en particulier d'être vissées, à un noeud de liaison (30) de préférence à angle droit en formant des structures en portiques, via des brides (23, 24).

8. Structure porteuse selon l'une ou plusieurs des revendications précédentes, caractérisée en ce qu'il prévu des éléments d'accouplement mécanique susceptibles d'être reliés aux pièces profilées (1), sous forme de tôles de serrage (31) qui sont susceptibles d'être serrées par paires les unes contre les autres et dans des rainures d'accouplement intérieures (11) des pièces profilées (1), et en ce qu'à leurs extrémités libres il est possible de fixer des éléments d'écartement (33), des étriers de maintien (35) pour des éléments de surface (36) et/ou des cordons de tension (37).

9. Structure porteuse selon l'une ou plusieurs des revendications précédentes, caractérisée en ce que les pièces profilées (1) sont susceptibles d'être accouplées à plat les unes contre les autres sous des angles différents moyen d'éléments de liaison pivotants (39) qui présentent chacun deux pinces plates (40) susceptibles d'être basculées l'une par rapport l'autre et susceptibles d'être serrées contre une plaque intermédiaire ou plaque d'écartement (42), lesdites pinces pouvant être fixées par l'opération de serrage dans des rainures d'accouplement extérieures (9) des pièces profilées (1).

## Claims

1. Support structure for lighting systems and their components and also for partition, roofing and functional surfaces consisting of sectional parts (1) which can be coupled to one another, which are stiff in bending and which have a peripheral contour of rectangular cross section, which bounds four fixing and receiving spaces (3, 4) which extend in the longitudinal direction of the section, with the fixing and receiving spaces (3, 4) being intended to receive and/or hold the lighting systems and/or their components and/or mechanical coupling elements (31, 37) and being provided at regions of their wall which lie within the peripheral contour, with coupling grooves (8, 9) and/or coupling webs (10), characterised in that the sectional part (1) has an x-shaped cross section of mirror symmetry relative to the horizontal and vertical central plane (6, 7); and in that the four fixing and receiving spaces (3, 4) are respectively formed as isosceles triangular spaces which are bounded at their base surface by the rectangular peripheral contour and at their two side surfaces by the limbs (2) of the x-shaped cross section of the section which are provided at their free ends with web strips (5) extending in the longitudinal direction of the section.

2. Support structure in accordance with claim 1, characterised in that the width of opening of the fixing and receiving spaces (3, 4) which lie perpendicular to one another is different.

3. Support structure in accordance with claim 1 or claim 2, characterised in that coupling grooves (8) and/or coupling webs (10) are provided for the fixing and receiving spaces (4) having a smaller width of opening at or in the region of the web strips (5); and in that the coupling grooves (9, 11) are formed at the fixing and receiving spaces (3) with the greater width of opening, in the outwardly and inwardly disposed regions of the section limbs (2).

4. Support structure in accordance with one of the preceding claims, characterised in that fixing grooves (13) and preferably support webs (12) disposed symmetrically thereto are provided, at least in the fixing and receiving chambers (4) with the lesser width of opening, at the base side for screw attachment.

5. Support structure in accordance with one or more of the preceding claims, characterised in that the coupling grooves (8, 9) consist of grooves which are of T-shaped, circular or part-circular shape in cross section.

6. Support structure in accordance with one of the preceding claims, characterised in that the end of the sections are connectable by coupling flanges (24) or foot parts (29) by means of self-tapping screws (27, 28), preferably via the coupling grooves of circular cross section.

7. Support structure in accordance with one or more of the preceding claims, characterised in that straight sections (1) can be coupled together and in particular can be bolted together via flanges (23, 24) using a preferably right angles connection node (30) to form portal structures.

8. Support structure in accordance with one or more of the preceding claims, characterised in that mechanical coupling elements in the form of sheet metal clamps (31) are provided which can be connected to the section parts (1) and which can be clamped pair-wise relative to one another and within inwardly disposed coupling grooves (11) of the section parts (1); and in that spacer elements (33), holding yokes (35) for areal elements (36) and/or tensioning cords (37) can be secured to the free end of the sheet metal clamps.

9. Support structure in accordance with one or more of the preceding claims, characterised in that the section parts (1) can be coupled to one another surface to surface and at different angles to one another via pivot connectors (39) which respectively have two mutually pivotable flat clamps (40) which can be clamped against an intermediate disc or spacer disc (42) and which can be fixed into outwardly disposed coupling grooves (9) of the section parts (1) by the clamping procedure.
